# EUROPÄISCHE PATENTSCHRIFT

(11) **EP 3 835 183 B1**
(45) Veröffentlichungstag und Bekanntmachung des Hinweises auf die Patenterteilung: **08.06.2022**
(21) Anmeldenummer: 20212614.0
(22) Anmeldetag: 09.12.2020
(51) Int. Cl.: B62H 3/04

(54) **FAHRRADHALTER, EINZELFAHRRADHALTER UND FAHRRADHALTERSYSTEM**
BICYCLE HOLDER, SINGLE BICYCLE HOLDER AND BICYCLE HOLDER SYSTEM
PORTE-VÉLO, PORTE-VÉLO UNIQUE ET SYSTÈME DE PORTE-VÉLO

(30) Priorität: 10.12.2019 DE 202019106880 U
(43) Veröffentlichungstag der Anmeldung: 16.06.2021
(73) Patentinhaber: Canyon Bicycles GmbH, 56073 Koblenz (DE)
(72) Erfinder: Caratiola, Nicolas, 56073 Koblenz (DE)
(74) Vertreter: dompatent von Kreisler Selting Werner - Partnerschaft von Patent- und Rechtsanwälten mbB

(56) Entgegenhaltungen:
- DE-U1-202019 003 504
- JP-A- 2011 068 341
- KR-B1- 101 125 068

## Beschreibung

Die vorliegende Erfindung betrifft einen Fahrradhalter; einen Einzelfahrradhalter; sowie ein Fahrradhaltersystem.

Ein Fahrradhalter, auch Fahrradabstellanlage oder Fahrradständer genannt, ist eine Vorrichtung zum Abstellen von Fahrrädern. Hiervon zu unterscheiden sind Einrichtungen wie beispielsweise Fahrradseitenständer, die mit dem Fahrrad insbesondere fest verbunden sind. Bei Fahrradhaltern handelt es sich somit um eine vom Fahrrad separate Vorrichtung, in die das Fahrrad beispielsweise eingestellt und/oder eingeschoben werden kann und somit ein Abstellen ermöglicht.

Eine einfache und weitverbreitete Bauform eines Fahrradhalters ist der Felgenklemmer. Geläufige Felgenklemmer weisen zwei parallele oder trichterförmig angeordnete Drahtbügel auf, in die das Rad eines Fahrrads, insbesondere das Vorderrad, eingeschoben und hierdurch klemmend gehalten wird. Nachteilig an derartigen Felgenklemmern ist, dass Fahrräder mit schmalen Rädern, beispielsweise Rennräder, keinen Halt finden und/oder Fahrräder mit breiten Rädern, beispielsweise Fatbikes, nicht in die Klemmung passen und demnach ein Halten der Fahrräder nicht oder unzureichend möglich ist.

Aufgabe der Erfindung ist es, einen Fahrradhalter, einen Einzelfahrradhalter sowie ein Fahrradhaltersystem zu schaffen, wobei ein Abstellen von Fahrrädern mit unterschiedlichen Randbreiten verbessert ist.

Die Lösung der Aufgabe erfolgt durch einen Fahrradhalter nach Anspruch 1, einen Einzelfahrradhalter nach Anspruch 14 sowie ein Fahrradhaltersystem nach Anspruch 15.

Dokument JP2011068341 A zeigt alle Merkmale der Präambel des Anspruchs 1.

Der erfindungsgemäße Fahrradhalter weist eine Radfixierung zur Fixierung des Rads eines Fahrrads auf. Die Radfixierung weist einen Aufnahmeraum zur klemmenden Aufnahme des Rads des Fahrrads auf. Bevorzugt ist es, dass der Aufnahmeraum im Wesentlichen teilkreisförmig ausgebildet ist und somit insbesondere die Form des Fahrradreifens aufgreift. Hierdurch erfolgt die Klemmung bevorzugt nur am Gummi des Fahrradreifens, so dass die Felge nicht berührt wird. Die Breite des Aufnahmeraums ist zur Aufnahme unterschiedlicher Radbreiten des Rads des Fahrrads änderbar. Die Breite des Aufnahmeraums kann somit verringert bzw. vergrößert werden. Besonders bevorzugt ist es, dass die Breite des Aufnahmeraums stufenlos änderbar ist. Vorzugsweise ist der Aufnahmeraum zumindest zu einer Seite hin offen ausgestaltet, so dass das Rad des Fahrrads über diese Öffnung in den Aufnahmeraum eingeführt werden kann. Bei dieser mindestens einen Öffnung handelt es sich vorzugsweise um eine nach oben gerichtete Öffnung, wenn der Fahrradhalter auf einer Fläche, insbesondere einer Bodenfläche, positioniert ist. Alternativ oder zusätzlich ist der Aufnahmeraum zu einer anderen Seite hin offen, wobei es sich insbesondere um eine Längsseite des Fahrradhalters handelt, wenn der Fahrradhalter auf einer Fläche, insbesondere einer Bodenfläche, positioniert ist. Besonders bevorzugt ist es, dass der Aufnahmeraum zu beiden Längsseiten hin offen ist. Über die einseitige oder beidseitige Öffnung des Aufnahmeraums in Längsrichtung ist es vorzugsweise möglich, das Rad des Fahrrads einseitig oder beidseitig in den Aufnahmeraum einzuführen, insbesondere einzuschieben. Die ein- bzw. beidseitige Öffnung des Aufnahmeraums in Längsrichtung kann mit anderen Worten als Aufnahmepassage bezeichnet werden. In bevorzugter Ausführung ist der Aufnahmeraum bei in Längsrichtung einseitiger oder beidseitiger Öffnung verengt oder geschlossen, beispielsweise über zumindest eine Verstrebung und/oder zumindest einen Vorsprung. Über diese ein- oder beidseitige Verengung und/oder Verschließung des Aufnahmeraums in Längsrichtung ist es vorteilhaft umgesetzt, dass das Rad des Fahrrads zwar einfach in den Aufnahmeraum eingeführt werden kann, jedoch ein ein- bzw. beidseitiges Herausrollen des Rads verhindert ist. Über die änderbare Breite des Aufnahmeraums ist es vorteilhaft umgesetzt, dass Fahrräder mit unterschiedlichen Radbreiten in dem Fahrradhalter abgestellt werden können. Besonders bevorzugt ist es, dass die Breite des gesamten Fahrradhalters änderbar ausgeführt ist. Bei dieser besonders bevorzugten Ausführung, bei der der gesamte Fahrradhalter in der Breite änderbar ausgeführt ist, ist es vorteilhaft umgesetzt, dass der gesamte Fahrradhalter komprimiert werden kann. Hierdurch ist beispielsweise umgesetzt, dass der Fahrradhalter einfacher verstaut und/oder transportiert werden kann.

Erfindungsgemäss weist der Fahrradhalter eine Gelenkvorrichtung zui Änderung der Breite des Aufnahmeraums auf. Besonders bevorzugt ist es, dass die Gelenkvorrichtung derart ausgeführt ist, dass hierüber eine Änderung der Breite des gesamten Fahrradhalters erfolgt. Es ist besonders bevorzugt, dass der Fahrradhalter, insbesondere zur Änderung der Breite des Aufnahmeraums, schienenlos ist. Bei der schienenlosen Ausführung ist es demnach bevorzugt, dass der Fahrradhalter keine Schiene, insbesondere keine Schienenführung, aufweist.

In bevorzugter Ausführung weist die Gelenkvorrichtung ein Scherenscharnier und einen Gelenkarm auf. Erfindungsgemäss ist es, dass die Gelenkvorrichtung aus dem Scherenscharnier besteht. Das Scherenscharnier ist hierbei vorzugsweise als Nürnberger Schere ausgeführt.

In bevorzugter Ausführung weist der Fahrradhalter eine Höhenhalterung zum erhöhten Aufstellen des Rads des Fahrrads auf. Vorzugsweise handelt es sich um eine punktuelle Höhenhalterung, sodass das Rad des Fahrrads punktuell, also an mindestens einem Haltepunkt gehalten wird. Besonders bevorzugt handelt es sich um eine zweifach punktuelle Höhenhalterung, sodass das Rad des Fahrrads punktuell an, insbesondere exakt, zwei Haltepunkten gehalten wird. Die Höhenhalterung ist derart ausgeführt, dass das Rad des Fahrrads erhöht, also vorzugsweise beabstandet von einer Fläche, insbesondere einer Bodenfläche, auf der der Fahrradhalter angeordnet ist, gehalten wird. Mit anderen Worten wird das Rad des Fahrrads durch die Höhenhalterung vorzugsweise "in der Luft" gehalten. Die Höhenhalterung weist insbesondere mindestens eine Aufstellfläche auf, auf der das Rad des Fahrrads aufgestellt werden kann. Praxistests haben gezeigt, dass durch die Erhöhung des Rads eine wesentlich bessere Klemmung erreicht wird, als durch Fahrradhalter des Stands der Technik ohne erhöhtes Halten. Zudem wird insbesondere auch verhindert, dass an der Felge des Fahrrads selbst geklemmt wird. Insbesondere bei hochwertigen Felgen ist eine Klemmung der Felgen selbst nicht gewünscht.

Es ist bevorzugt, dass die Radfixierung zwei sich gegenüberliegende, vorzugsweise parallele, Fixierkörper zur Ausbildung des Aufnahmeraums aufweist. Bevorzugt weist jeder der Fixierkörper einen Bügel oder eine Fläche auf, besteht insbesondere daraus. Zur Änderung der Breite des Aufnahmeraums ist der Abstand der Fixierkörper zueinander, insbesondere über die Gelenkvorrichtung, änderbar. Besonders bevorzugt ist es, dass die Fixierkörper beweglich zueinander, insbesondere über die Gelenkvorrichtung, verbunden sind. Vorzugsweise sind die Fixierkörper lediglich über die Gelenkvorrichtung miteinander verbunden. Die Fixierkörper sind insbesondere zur, vorzugsweise klemmenden, Fixierung des Reifens des Rads des Fahrrads ausgeführt. Besonders bevorzugt ist es, dass lediglich eine Fixierung des Reifens und somit insbesondere keine Berührung der Felge des Rads erfolgt. Vorzugsweise weisen die Fixierkörper eine, insbesondere Gummi aufweisende, Fixierfläche zur Fixierung des Reifens des Rads auf. Die Fixierkörper und/oder die Fixierflächen sind vorzugsweise im Wesentlichen teilkreisförmig ausgebildet. Somit ist es bevorzugt, dass diese die Form des Fahrradreifens aufgreifen. Hierdurch erfolgt die Klemmung bevorzugt nur am Gummi des Fahrradreifens, so dass die Felge nicht berührt wird.

Jeder der Fixierkörper weist vorzugsweise eine Seitenwand auf. Die Seitenwand ist insbesondere flächig ausgeführt. Bevorzugt weisen die Seitenwände eine im Wesentlichen teilkreisförmige Form auf. Über die Seitenwand, insbesondere die flächige Seitenwand, ist es vorteilhaft umgesetzt, dass bei der Einklemmung des Rads des Fahrrads über die beiden Seitenwände eine flächige Einklemmung erfolgt und somit die Klemmkraft über eine große Fläche des Rads, vorzugsweise nur am Reifen ohne Berührung der Felge, verteilt wird. Im Gegensatz zu Fahrradhaltern des Stands der Technik ist hierdurch eine optimale Einklemmung des Rads gegeben, und/oder bei einem Verkippen des Rads bzw. des gesamten Fahrrads ist die Gefahr des Verbiegens des Rads minimiert.

In bevorzugter Ausführung weist die Radfixierung Gummi, insbesondere Elastomer, zum klemmenden Halten des Rads des Fahrrads auf. Vorzugsweise ist der Gummi derart angeordnet, dass dieser bei gehaltenem Fahrrad im Fahrradhalter dem klemmend gehaltenen Rad des Fahrrads zugeordnet ist. Bevorzugt ist es, dass die Fixierkörper Gummi aufweisen. Besonders bevorzugt ist es, dass die Seitenwände, insbesondere vollflächig, Gummi aufweisen. Bei Ausführung der Seitenwände mit Gummi ist es bevorzugt, dass die Seitenwände, zumindest an der zum Rad weisenden Seite, gummiert sind. Durch den Gummi kommt es zu dem Vorteil, dass Kratzer, insbesondere der Felge, verhindert werden und/oder die Reibung der Klemmung erhöht wird.

Es ist bevorzugt, dass die Gelenkvorrichtung die Fixierkörper beweglich miteinander verbindet. Bevorzugt ist es, dass die Gelenkvorrichtung, insbesondere vollständig, zwischen den Fixierkörpern angeordnet ist und somit vorzugweise nicht über die Ausmaße des durch die Fixierkörper ausgebildeten Aufnahmeraums herausragt. Über diese Anordnung der Gelenkvorrichtung zwischen den Fixierkörpern ist einerseits eine kompakte Bauform des Fahrradhalters umgesetzt und/oder andererseits eine Breitenänderung des gesamten Fahrradhalters möglich.

Bevorzugt ist es, dass der Fahrradhalter eine Vorspannvorrichtung aufweist. Die Vorspannvorrichtung ist insbesondere derart ausgeführt, dass sie die Fixierkörper zueinander drängt. Besonders bevorzugt ist es, dass die Vorspannvorrichtung zwischen den Fixierkörpern angeordnet ist und insbesondere die Fixierkörper verbindet. Vorzugsweise weist die Vorspannvorrichtung eine Feder, insbesondere eine Zugfeder auf, besteht insbesondere daraus. Mittels Vorspannvorrichtung ist es vorteilhaft möglich, dass die Breite des Aufnahmeraums selbsttätig verringert wird und somit beispielsweise eine automatische Klemmung des Rads des Fahrrads und/oder eine automatische Komprimierung des Fahrradhalters erfolgt.

Vorzugsweise ist die Höhenhalterung mit den Fixierkörpern, bevorzugt fest, besonders bevorzugt einstückig, verbunden.

In bevorzugter Ausführung ist zwischen den Fixierkörpern mindestens ein Vorsprung angeordnet. Der mindestens eine Vorsprung ist insbesondere derart ausgeführt, dass dieser den Aufnahmeraum vorzugsweise an zumindest einer Längsseite verengt oder verschließt. Insbesondere schließt der mindestens eine Vorsprung somit den Aufnahmeraum an dieser Seite ab. Besonders bevorzugt ist es, dass jeweils mindestens ein Vorsprung den Aufnahmeraum beidseitig an den Längsseiten verengt oder verschließt. Bevorzugt ist es, dass dieses Verengen und/oder Verschließen mittels Vorsprung der oben beschriebenen Verengung und/oder Verschließung entspricht. Der mindestens eine Vorsprung ist insbesondere als Abstandshalter ausgebildet und/oder als Radanlage für das Rad des Fahrrads ausgebildet und/oder bildet die Höhenhalterung aus. Bei Ausführung des mindestens einen Vorsprungs als Abstandshalter legt der Vorsprung einen Mindestabstand zwischen den beiden Fixierkörpern und somit eine Mindestbreite des Aufnahmeraums fest. Bei Ausführung des mindestens einen Vorsprungs als Radanlage kann das Rad des Fahrrads bei Fixierung im Fahrradhalter mit der Lauffläche an dem Vorsprung ein- oder beidseitig anliegen. Somit ist vorteilhaft ein längsseitiges Herausrollen des Rads verhindert. Bei der Ausführung, bei der der mindestens eine Vorsprung die Höhenhalterung ausbildet, hält der mindestens eine Vorsprung insbesondere das Rad des Fahrrads erhöht. Besonders bevorzugt ist es, dass mit jedem der Fixierkörper mindestens ein, vorzugsweise zwei Vorsprünge, insbesondere einstückig, verbunden sind. Besonders bevorzugt ist es, dass sich Vorsprünge der beiden Fixierkörper jeweils stirnseitig gegenüberliegen. Es ist bevorzugt, dass der Fixierkörper mindestens eine Höhe von 10 bis 15 mm, insbesondere eine Höhe von 11 mm aufweist.

In bevorzugter Ausführung ist die Breite des Aufnahmeraums variabel änderbar in einem Bereich von 0 bis 150 mm, vorzugsweise zwischen 22 bis 130 mm. Über diese variable Breite des Aufnahmeraums ist vorteilhaft ein Halten der meisten geläufigen Radbreiten gegeben.

Es ist bevorzugt, dass der Fahrradhalter, insbesondere die Gelenkvorrichtung, eine Sperrvorrichtung aufweist. Die Sperrvorrichtung ist derart ausgeführt, dass die Breite des Aufnahmeraums, vorzugsweise temporär, fixiert werden kann. Die Sperrvorrichtung weist vorzugsweise mindestens eine Schraube oder eine Schnellsperrvorrichtung auf, besteht insbesondere daraus. Besonders bevorzugt ist es, dass die Sperrvorrichtung die Gelenkvorrichtung sperrt, so dass diese unbeweglich ist. Mittels Sperrvorrichtung ist es vorteilhaft umgesetzt, dass einerseits der Aufnahmeraum auf eine gewisse Breite und somit eine gewisse Radbreite eingestellt werden kann, und/oder andererseits kann eine fixierte Rad-Presspassung des Rads des Fahrrads in der Radfixierung vorgenommen werden.

In bevorzugter Ausführung weist der Fahrradhalter eine Standvorrichtung zur Anordnung des Fahrradhalters auf einer Fläche, vorzugsweise einer Bodenfläche auf. Besonders bevorzugt ist es, dass die Standvorrichtung mit der Radfixierung, insbesondere den Fixierkörpern, verbunden ist. Diese Verbindung zwischen Standvorrichtung und Radfixierung ist insbesondere fest, vorzugsweise permanent fest ausgeführt. Die Verbindung kann einstückig, auch als integral zu bezeichnen, ausgeführt sein. Mittels fester bzw. einstückiger Verbindung zwischen Standvorrichtung und Radfixierung ist es vorteilhaft umgesetzt, dass bei einer bewegten Änderung der Breite des Aufnahmeraums ebenfalls die Standvorrichtung bewegt und somit vorteilhaft komprimiert werden kann. Bevorzugt ist es, dass die Standvorrichtung im Wesentlichen die Form einer ebenen Fläche hat. Vorzugsweise hat die Standvorrichtung eine Polygon-Form. Besonders bevorzugt ist es, dass die Standvorrichtung eine Viereck- oder Sechseck-Form hat. Vorteilhaft ist es aufgrund der geraden Seiten der Polygonform möglich, mehrere erfindungsgemäße Fahrradhalter geradflächig aneinander anzulegen.

In bevorzugter Ausführung weist die Standvorrichtung einen Standfuß auf. Besonders bevorzugt ist es, dass die Standvorrichtung zwei Standfüße aufweist. Weist die Standvorrichtung zwei Standfüße auf, ist es bevorzugt, dass jeweils ein Standfuß mit vorzugsweise lediglich einem Fixierkörper verbunden ist. Die Verbindung zwischen Standfuß und Fixierkörper ist insbesondere fest, besonders bevorzugt einstückig. Vorteilhaft ist es hierdurch möglich, bei einer Änderung des Abstands der Fixierkörper ebenfalls die Standfüße mitzubewegen und somit insgesamt die Ausdehnungen des Fahrradhalters zu beeinflussen, diesen insbesondere zu komprimieren.

In bevorzugter Ausführung weist der Fahrradhalter mindestens eine Verbindungsvorrichtung zur, vorzugsweise temporären, Verbindung des erfindungsgemäßen Fahrradhalters mit einem weiteren, insbesondere erfindungsgemäßen Fahrradhalter, auf. Besonders bevorzugt ist es, dass die Verbindungsvorrichtung Teil der Standvorrichtung ist. Es handelt sich vorzugsweise um eine berührende und/oder formschlüssige und/oder stoffschlüssige und/oder selektiv koppelbare Verbindungsvorrichtung.

Es ist bevorzugt, dass der Fahrradhalter symmetrisch, insbesondere spiegelsymmetrisch ist. Besonders bevorzugt ist es, dass der Fahrradhalter bei Positionierung des Fahrradhalters auf einer Fläche spiegelsymmetrisch bezüglich mindestens einer, insbesondere bezüglich den beiden vertikalen Ebenen, beispielsweise der Längs- und Querebene, ist.

Bei dem erfindungsgemäßen Einzelfahrradhalter handelt es sich vorzugsweise um einen Einzelparker. Der Einzelfahrradhalter ist zum Abstellen lediglich eines einzigen Fahrrads ausgeführt. Der Einzelfahrradhalter weist einen einzigen erfindungsgemäßen Fahrradhalter mit einem oder mehreren der oben beschriebenen Merkmale auf.

Bei dem erfindungsgemäßen Fahrradhaltersystem handelt es sich insbesondere um einen Reihenparker. Das Fahrradhaltersystem weist mindestens zwei miteinander verbundene erfindungsgemäße Fahrradhalter auf. Bevorzugt ist es, dass die Verbindung der mindestens zwei Fahrradhalter berührend und/oder formschlüssig und/oder stoffschlüssig und/oder selektiv koppelbar ist. Besonders bevorzugt erfolgt die Verbindung der mindestens zwei Fahrradhalter über die Verbindungsvorrichtung. Vorzugsweise erfolgt die Verbindung der mindestens zwei Fahrradhalter über die Standvorrichtung der Fahrradhalter.

Nachfolgend wird die Erfindung anhand bevorzugter Ausführungsformen unter Bezugnahme auf die anliegenden Zeichnungen näher erörtert:
Es zeigen:
- Fig. 1: eine perspektivische Darstellung einer Ausführungsform eines erfindungsgemäßen Fahrradhalters in einem ersten Zustand,
- Fig. 2: eine perspektivische Darstellung des Fahrradhalters aus Fig. 2 in einem zweiten Zustand,
- Fig. 3: eine Draufsicht auf den Fahrradhalter aus Fig. 2,
- Fig. 4: eine Draufsicht auf eine weitere Ausführungsform eines erfindungsgemäßen Fahrradhalters, und
- Fig. 5: eine Draufsicht auf eine Ausführungsform eines erfindungsgemäßen Fahrradhaltersystems.

Ähnliche oder identische Bauteile bzw. Elemente werden in den Figuren mit gleichen Bezugszeichen bzw. Variationen davon (beispielsweise 10 sowie 10a und 10b) identifiziert. Insbesondere zur verbesserten Übersichtlichkeit werden Elemente nicht in allen Figuren mit Bezugszeichen versehen.

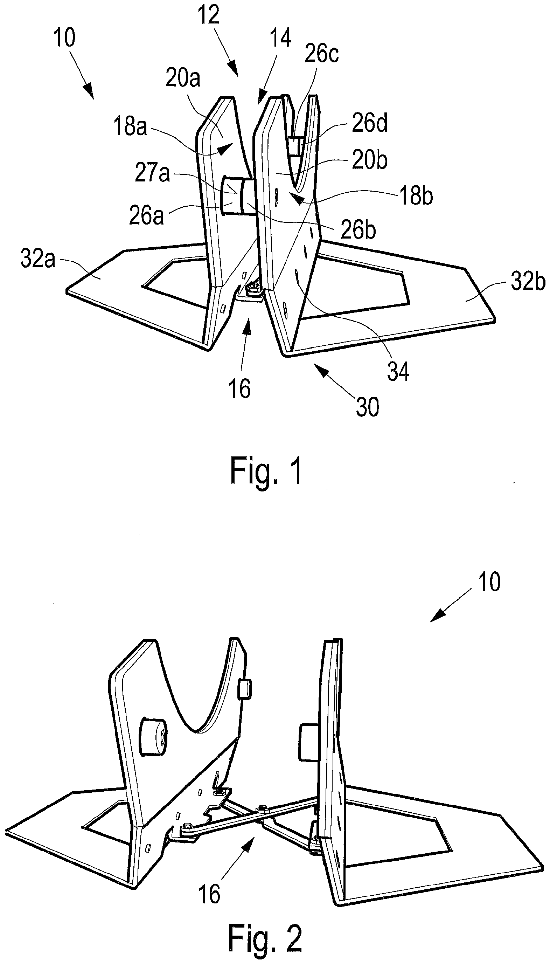

Fig. 1 zeigt eine Ausführungsform eines erfindungsgemäßen Fahrradhalters 10. Darüber hinaus ist Fig. 1 ebenfalls eine Ausführungsform eines erfindungsgemäßen Einzelfahrradhalters zu entnehmen, der hierbei lediglich den Fahrradhalter 10 aufweist, insbesondere daraus besteht.

Der Fahrradhalter 10 weist eine Radfixierung 12 mit zwei Fixierkörpern 18a, 18b auf. Zwischen den Fixierkörpern 18a, 18b erstreckt sich ein Aufnahmeraum 14 zur klemmenden Aufnahme eines Rads eines Fahrrads.

Die Fixierkörper 18a, 18b sind beweglich über eine Gelenkvorrichtung 16, dargestellt in Form eines Scherenscharniers, miteinander verbunden. In dargestellter Ausführungsform befindet sich die Gelenkvorrichtung 16 in minimaler Auslenkung, so dass der Aufnahmeraum 14 eine minimale Breite aufweist. In dieser Einstellung kann der Fahrradhalter 10 beispielsweise Fahrräder mit schmalen Reifen, wie beispielsweise Rennräder, aufnehmen.

Die Fixierkörper 18a, 18b weisen jeweils in den Außenbereichen des Aufnahmeraums pro Seite einen Vorsprung 26a-26d auf. Die Vorsprünge 26a bzw. 26c des ersten Fixierkörpers 18a sind den Vorsprüngen 26b bzw. 26d des zweiten Fixierkörpers 18b stirnseitig gegenüberliegend angeordnet. In der dargestellten minimalen Breite des Aufnahmeraums liegen die sich stirnseitig gegenüberliegenden Vorsprünge 26a, 26b sowie 26c, 26d aneinander an. Die Vorsprünge 26a-26d fungieren hierbei als Abstandshalter.

Darüber hinaus fungieren die Vorsprünge 26a-26d als Radanlage für ein im Aufnahmeraum 14 aufgenommenes Rad eines Fahrrads. So liegt ein aufgenommenes Rad mit der Lauffläche an den Außenflächen 27 (beispielhaft ist lediglich Außenfläche 27a von Vorsprung 26a mit Bezugszeichen identifiziert) der Vorsprünge 26a-26d an. Insbesondere liegt hierbei ein Teil der Lauffläche des Rads an den Außenflächen der Vorsprünge 26a und 26b an, wodurch vorteilhaft eine Bewegung des Rads zu dieser Seite hin verhindert ist, und/oder ein anderer Teil der Lauffläche des Rads liegt an den Außenflächen der Vorsprünge 26c und 26d an, wodurch vorteilhaft eine Bewegung des Rads zu dieser anderen Seite hin verhindert ist. Durch dieses Anliegen des Rads an den Vorsprüngen 26a-26d ist das Rad in Längsrichtung ein- oder beidseitig vorzugsweise fixiert und somit ein Herausrollen des Rads nach vorne oder hinten verhindert. Besonders bevorzugt ist es, dass das Rad des Fahrrads auf den Vorsprüngen 26a-26d steht und somit von den Vorsprüngen 26a-26d erhöht, also vom Boden beabstandet, gehalten wird. Hierbei steht das Rad des Fahrrads vorzugsweise einerseits punktuell auf den Außenflächen der Vorsprünge 26a und26b und andererseits punktuell auf den Vorsprüngen 26c und 26d auf. Demnach fungieren die Vorsprünge 26a-26d als Höhenhalterung 26 (Bezugszeichen 26a-26d) zum erhöhten Aufstellen des Rads des Fahrrads. Das Rad des Fahrrads "hängt" hierbei zwischen den Vorsprüngen 26a-26d "durch", sodass ebenfalls die Funktion der Radanlage zur Verhinderung des Herausrollens (siehe oben) umgesetzt ist. Die Vorsprünge 26a-26d stellen Verengungen und/oder Verschließungen des Aufnahmeraums 14 zur Fixierung des Rads in Längsrichtung dar. Über die Klemmung des Rads durch die Fixierkörper 18a, 18b im Aufnahmeraum 14 wird das Rad hingegen in Querrichtung fixiert. Die Vorsprünge 26a-26d übernehmen zusammenfassend vorzugsweise die drei Funktionen: Abstandshalter zwischen den Fixierkörpern; Radanlage zur Verhinderung des Herausrollens des Rads des Fahrrads; und Höhenhalterung (26) zum erhöhten Aufstellen des Rads des Fahrrads.

Weitergehend weist der dargestellte Fahrradhalter 10 eine Standvorrichtung 30 auf. Die Standvorrichtung 30 weist zwei Standfüße 32a, 32b auf. Der Standfuß 32a ist mit dem Fixierkörper 18a verbunden, während der Standfuß 32b mit dem Fixierkörper 18b verbunden ist. Dargestellt ist die Verbindung jeweils über eine Schraubverbindung, mit Schrauben 34 ausgeführt. Andererseits ist beispielsweise auch eine einstückige Ausgestaltung zwischen Fixierkörper 18a, 18b und Standfuß 32a, 32b möglich.

Über die Standvorrichtung 30 kann der Fahrradhalter 10 auf einer Fläche, insbesondere einer Bodenfläche positioniert werden.

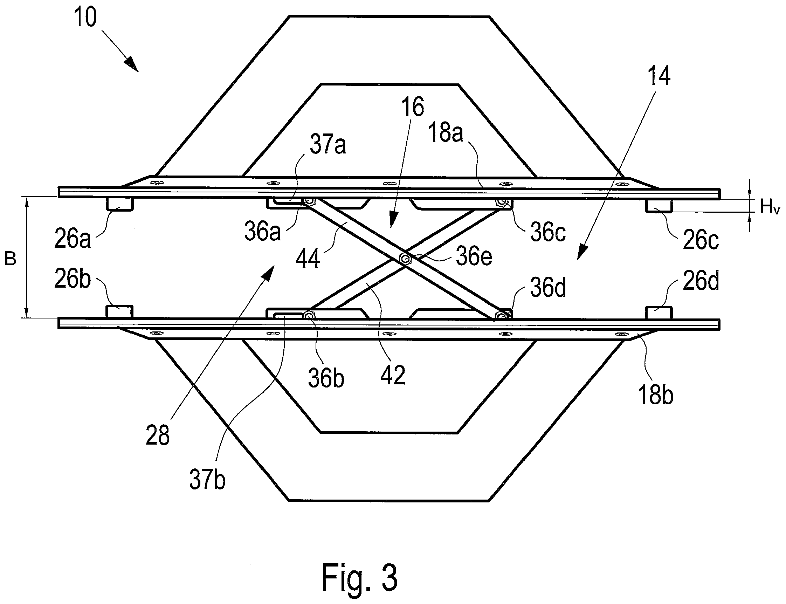

Fig. 2 zeigt den Fahrradhalter 10 aus Fig. 1 mit maximal ausgelenkter Gelenkvorrichtung 16, wobei Fig. 3 eine Draufsicht hierauf zeigt.

In maximaler Auslenkung weist der Aufnahmeraum 14 eine maximale Breite B, vorzugsweise von 130 mm (s. Fig. 3) auf - während die minimale Breite B, dargestellt in Fig. 1, vorzugsweise 22 mm beträgt. In dieser Breite aus Fig. 3 können Fahrräder mit besonders breiten Reifen, beispielsweise Fatbikes, mit dem Fahrradhalter 10 abgestellt werden. Auch hier können die Laufflächen des Rads an den Vorsprüngen 26a-26d anliegen und somit ein Herausrollen in Längsrichtung des Rads verhindern.

Die Vorsprünge 26a-26d weisen eine Vorsprunghöhe Hᵥ auf. Diese Höhe entspricht vorzugsweise 11 mm, so dass über die Vorsprünge 26a bis 26d eine minimale Breite B des Aufnahmeraums von 22 mm vorliegt (s. Fig. 1).

In maximaler Auslenkung (Fig. 3) befinden sich die Schrauben 36a, 36b maximal ausgelenkt in eine Richtung in den Schlitzen 37a, 37b. Über die Gelenkvorrichtung 16, insbesondere eine entsprechende Positionierung der Schrauben 36a, 36b in den Schlitzen 37a, 37b kann die Breite des Aufnahmeraums 14 entsprechend variiert werden und somit verschieden breite Fahrradräder aufgenommen werden.

Über die Gelenkvorrichtung 16 sind die Fixierkörper 18a, 18b beweglich zueinander ausgeführt, so dass deren Abstand zueinander variiert werden kann. Die Streben 42, 44 sind hierzu einerseits verschiebbar beweglich, wobei die Schrauben 36a, 36b in den Schlitzen 37a, 37b der Fixierkörper 18a, 18b und andererseits drehbar beweglich über die Schrauben 36c, 36d verbunden sind. Mittig sind die Streben 42, 44 über die Schraube 36e drehbar miteinander verbunden. Bei den Schrauben 36a-36e handelt es sich vorzugsweise um Inbusschrauben. Durch ein Anziehen zumindest einer Schraube, insbesondere der Schrauben 36a, 36b, kann die Gelenkvorrichtung 16 gesperrt werden. Hierdurch ist eine Sperrvorrichtung 28 umgesetzt.

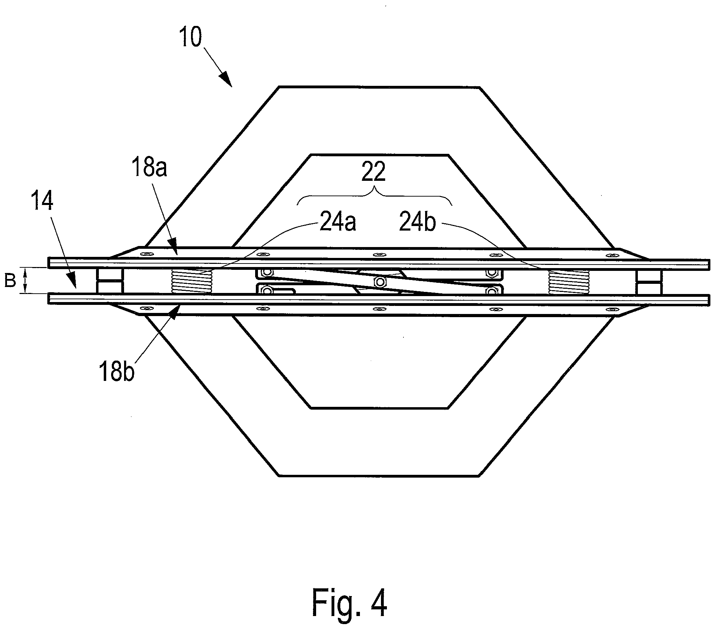

Fig. 4 zeigt eine Draufsicht auf eine weitere Ausführungsform eines Fahrradhalters 10. Der Fahrradhalter 10 entspricht hierbei im Wesentlichen dem Fahrradhalter 10 aus Fig. 1 mit minimaler Breite B, insbesondere 22 mm, des Aufnahmeraums 14. Im Unterschied zu der Ausführungsform aus Fig. 1 weist der Fahrradhalter 10 aus Fig. 4 eine Vorspannvorrichtung 22 auf. Vorspannvorrichtung 22 weist dargestellt zwei Zugfedern 24a, 4b auf.

Diese Zugfedern 24a, 24b sind zwischen den Fixierkörpern 18a, 18b angeordnet und jeweils mit diesen verbunden. Die Federn 24a, 24b drängen die Fixierkörper 18a, 18b zueinander und erzwingen somit eine minimale Breite B des Aufnahmeraums 14. Hierdurch ist einerseits eine Selbstklemmung eines aufgenommenen Rads und andererseits eine Selbstkomprimierung des Fahrradhalters 10 an sich umgesetzt.

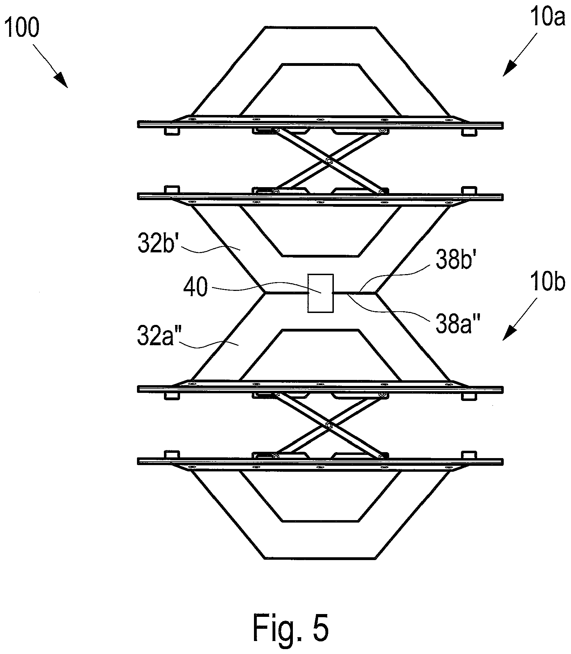

Fig. 5 zeigt eine Ausführungsform eines erfindungsgemäßen Fahrradhaltersystems 100 mit zwei Fahrradhaltern 10a, 10b. Die Fahrradhalter 10a, 10b entsprechen hierbei im Wesentlichen dem Fahrradhalter 10 aus Fig. 1. Dargestellt sind die Fahrradhalter 10a, 10b an den geraden Seiten 38b', 38a" der Standfüße 32b', 32a" aneinander anliegend. Ferner sind die Standfüße 32b', 32a" über Verbindungsvorrichtung 40 miteinander verbunden. Bevorzugt handelt es sich bei Verbindungsvorrichtung 40 um ein selektiv koppelbare Verbindungsvorrichtung, wie beispielsweise einen Bügel oder einen Spannhaken und/oder eine formschlüssige Verbindungsvorrichtung 40.

Anstelle der Ausführung des Fahrradhaltersystems 100 mit Verbindungsvorrichtung 40 ist alternativ beispielsweise auch ein Fahrradhaltersystem 100 (in Anlehnung an Fig. 5) möglich ohne Verbindungsvorrichtung 40, wobei lediglich ein Anliegen der Standfüße 32b', 32a" erfolgt.

Ebenfalls ist es möglich, mehr als zwei Fahrradhalter 10, insbesondere in Reihe, zu einem Fahrradhaltersystem 100 für mehrere Fahrräder zu verbinden.

Über das Fahrradhaltersystem 100 können mehrere Fahrräder, insbesondere in Reihe, abgestellt werden.

Auch ist es möglich, ein Fahrradhaltersystem 100 umzusetzen, bei dem Fahrradhalter 10, insbesondere zwei Fahrradhalter 10, linear angeordnet sind und somit beispielsweise beide Räder eines Fahrrads aufgenommen werden können.

## Patentansprüche

1. Fahrradhalter (10), mit
einer Radfixierung (12) zur Fixierung des Rads eines Fahrrads,
wobei die Radfixierung (12) einen Aufnahmeraum (14) zur klemmenden Aufnahme des Rads aufweist, und
wobei die Breite des Aufnahmeraums (14), zur Aufnahme unterschiedlicher Radbreiten, vorzugsweise stufenlos änderbar ist , wobei der Fahrradhalter (10) ferner eine Gelenkvorrichtung (16) zur Änderung der Breite des Aufnahmeraums (14) aufweist, **dadurch gekennzeichnet, dass** die Gelenkvorrichtung (16) ein Scherenscharnier aufweist.

2. Fahrradhalter (10) nach Anspruch 1, **dadurch gekennzeichnet, dass** die Gelenkvorrichtung (16) zur Änderung der Breite des gesamten Fahrradhalters (10) ausgeführt ist.

3. Fahrradhalter (10) nach Anspruch 1 oder 2, **dadurch gekennzeichnet, dass** die Gelenkvorrichtung (16) einen Gelenkarm aufweist, vorzugsweise daraus besteht.

4. Fahrradhalter (10) nach einem der Ansprüche 1 bis 3, **gekennzeichnet durch** eine, bevorzugt punktuelle, besonders bevorzugt zweifach punktuelle, Höhenhalterung (26) zum erhöhten Aufstellen des Rads des Fahrrads.

5. Fahrradhalter (10) nach einem der Ansprüche 1 bis 4, **dadurch gekennzeichnet, dass** die Radfixierung (12) zwei sich gegenüberliegende, vorzugsweise parallele, Fixierkörper (18a, 18b) zur Ausbildung des Aufnahmeraums (14) aufweist, wobei es bevorzugt ist, dass jeder der Fixierkörper (18a, 18b) eine, vorzugsweise flächige, Seitenwand (20) aufweist.

6. Fahrradhalter (10) nach Anspruch 5, **dadurch gekennzeichnet, dass** die Gelenkvorrichtung (16) die Fixierkörper (18a, 18b) beweglich verbindet, wobei es bevorzugt ist, dass die Gelenkvorrichtung (16) vorzugsweise vollständig zwischen den Fixierkörpern (18a, 18b) angeordnet ist.

7. Fahrradhalter (10) nach einem der Ansprüche 5 oder 6, **gekennzeichnet durch** eine die Fixierkörper (18a, 18b) zueinander drängende Vorspannvorrichtung (22), vorzugsweise mindestens eine Zugfeder (24) zwischen den Fixierkörpern (18a, 18b).

8. Fahrradhalter (10) nach einem der Ansprüche 5 bis 7, **gekennzeichnet durch** mindestens einen Vorsprung (26a-26d) zwischen den Fixierkörpern (18a, 18b), wobei der mindestens eine Vorsprung (26a-26d) vorzugsweise als Abstandshalter ausgebildet ist und/oder als Radanlage ausgebildet ist und/oder die Höhenhalterung (26) ausbildet.

9. Fahrradhalter (10) nach Anspruch 8, **dadurch gekennzeichnet, dass** der mindestens eine Vorsprung (26a-26d) den Aufnahmeraum (14) in Längsrichtung zumindest einseitig, vorzugsweise beidseitig abschließt, zur Verhinderung eines Herausrollens des Rads aus dem Aufnahmeraum (14).

10. Fahrradhalter (10) nach einem der Ansprüche 1 bis 9, **dadurch gekennzeichnet, dass** die Radfixierung (12) Gummi, insbesondere Elastomer, zur Fixierung des Rads des Fahrrads aufweisen.

11. Fahrradhalter (10) nach einem der Ansprüche 1 bis 10, **dadurch gekennzeichnet, dass** die Breite des Aufnahmeraums (14) variabel änderbar ist zwischen 0 mm - 150 mm, vorzugweise zwischen 22 mm bis 130 mm.

12. Fahrradhalter (10) nach einem der Ansprüche 1 bis 11, **gekennzeichnet durch** eine Sperrvorrichtung (28) zur, vorzugsweise temporären, Fixierung der Breite des Aufnahmeraums (14).

13. Fahrradhalter (10) nach einem der Ansprüche 1 bis 12, **gekennzeichnet durch** eine mit der Radfixierung (12) verbundene Standvorrichtung (30) zur Anordnung des Fahrradhalters (10) auf einer Fläche, vorzugsweise einer Bodenfläche, wobei es bevorzugt ist, dass die Standvorrichtung (30) zwei Standfüße (32a, 32b) aufweist.

14. Einzelfahrradhalter mit einem einzigen Fahrradhalter (10) nach einem der Ansprüche 1 bis 13.

15. Fahrradhaltersystem (100) mit zumindest zwei miteinander, vorzugsweise berührend und/oder formschlüssig und/oder stoffschlüssig und/oder selektiv koppelbar, verbundenen Fahrradhaltern (10) nach einem der Ansprüche 1 bis 13.

## Claims

1. Bicycle rack (10) comprising
a wheel fixing means (12) for fixing a bicycle wheel,
wherein the wheel fixing means (12) comprises a receiving space (14) for receiving the wheel in a clamping manner and
wherein for receiving different tire widths, the width of the receiving space (14) is preferably continuously variable,
wherein the bicycle rack (10) further comprises a hinge device (16) for changing the width of the receiving space (14),
**characterized in that**
the hinge device (16) comprises a scissors hinge.

2. Bicycle rack (10) according to claim 1, **characterized in that** the hinge device (16) is configured for changing the width of the bicycle rack (10) in its entirety.

3. Bicycle rack (10) according to claim 1 or 2, **characterized in that** the hinge device (16) comprises, preferably is formed by a hinge arm.

4. Bicycle rack (10) according to one of claims 1 to 3, **characterized by** a preferably point-wise, particularly preferred a double point-wise raised holder (26) for a raised positioning of the bicycle wheel.

5. Bicycle rack (10) according to claim 1 to 4, **characterized in that** the wheel fixing means (12) comprises two opposing, preferably parallel fixing bodies (18a, 18b) for forming the receiving space (14b), it being preferred that each fixing body (18a, 18b) has a preferably plane side wall (20).

6. Bicycle rack (10) according to claim 5, **characterized in that** the hinge device (16) connects the fixing bodies (18a, 18b) in a movable manner, it being preferred that the hinge device (16) is preferably arranged entirely between the fixing bodies (18a, 18b).

7. Bicycle rack (10) according to one of claims 5 or 6, **characterized by** a pre-tensioning device (22) urging the fixing bodies (18a, 18b) towards each other, preferably at least one tension spring (24) between the fixing bodies (18a, 18b).

8. Bicycle rack (10) according to one of claims 5 to 7, **characterized by** at least one protrusion (26a-26d) between the fixing bodies (18a, 16b), the at least one protrusion (26a-26d) preferably being designed as a spacer and/or a wheel contact and/or forming the raised holder (26).

9. Bicycle rack (10) according to claim 8, **characterized in that** the at least one protrusion (26a-26d) closes the receiving space (14) on at least one, preferably both sides in the longitudinal direction to prevent the wheel from rolling out from the receiving space (14).

10. Bicycle rack (10) according to one of claims 1 to 9, **characterized in that** the wheel fixing means (12) comprise rubber, in particular elastomer, for fixing the bicycle wheel.

11. Bicycle rack (10) according to one of claims 1 to 10, **characterized in that** the width of the receiving space (14) can be changed variably between 0 mm and 150 mm, preferably between 22 mm and 130 mm.

12. Bicycle rack (10) according to one of claims 1 to 11, **characterized by** a blocking device (28) for a preferably temporary fixing of the width of the receiving space (14).

13. Bicycle rack (10) according to one of claims 1 to 12, **characterized by** a base device (30) for arranging the bicycle rack (10) on a surface, preferably a ground surface, the base device being connected with the wheel fixing means (12), it being preferred that the base device (30) comprises two feet (32a, 32b).

14. Single bicycle rack with a single bicycle rack (10) according to one of claims 1 to 13.

15. Bicycle rack system (100) with at least two bicycle racks (10) according to one of claims 1 to 13 connected preferably in a contacting and/or positive fitting and/or material-bonding and/or selectively couplable manner.

## Revendications

1. Porte-vélo (10), doté
d'une fixation de roue (12) destinée à fixer la roue d'un vélo,
dans lequel la fixation de roue (12) comporte un espace de logement (14) destinée à loger la roue en la serrant, et
dans lequel la largeur de l'espace de logement (14) est de préférence modifiable de manière progressive afin de loger différentes largeurs de roue,
dans lequel le porte-vélo (10) comporte en outre un dispositif d'articulation (16) destiné à modifier la largeur de l'espace de logement (14),
**caractérisé en ce que** le dispositif d'articulation (16) comporte une charnière en ciseaux.

2. Porte-vélo (10) selon la revendication 1, **caractérisé en ce que** le dispositif d'articulation (16) est configuré pour modifier la largeur de la totalité du porte-vélo (10).

3. Porte-vélo (10) selon la revendication 1 ou 2, **caractérisé en ce que** le dispositif d'articulation (16) comporte un bras articulé, de préférence consiste en celui-ci.

4. Porte-vélo (10) selon l'une des revendications 1 à 3, **caractérisé par** un maintien en hauteur (26), de préférence ponctuel, plus particulièrement doublement ponctuel, destiné à installer la roue du vélo en hauteur.

5. Porte-vélo (10) selon l'une des revendications 1 à 4, **caractérisé en ce que** la fixation de roue (12) comporte deux corps de fixation (18a, 18b) opposés l'un à l'autre, de préférence parallèles, afin de réaliser l'espace de logement (14), dans lequel il est préférable que chacun des corps de fixation (18a, 18b) comporte une paroi latérale (20), de préférence plate.

6. Porte-vélo (10) selon la revendication 5, **caractérisé en ce que** le dispositif d'articulation (16) relie les corps de fixation (18a, 18b) de manière mobile, dans lequel il est préférable que le dispositif d'articulation (16) soit disposé, de préférence entièrement, entre les corps de fixation (18a, 18b).

7. Porte-vélo (10) selon l'une des revendications 5 ou 6, **caractérisé par** un dispositif de précontrainte (22) poussant les corps de fixation (18a, 18b) l'un vers l'autre, de préférence au moins un ressort de traction (24) entre les corps de fixation (18a, 18b).

8. Porte-vélo (10) selon l'une des revendications 5 à 7, **caractérisé par** au moins une saillie (26a-26d) entre les corps de fixation (18a, 18b), dans lequel l'au moins une saillie (26a-26d) est de préférence réalisée comme écarteur et/ou réalisée comme repose-roue et/ou réalise le maintien en hauteur (26).

9. Porte-vélo (10) selon la revendication 8, **caractérisé en ce que** l'au moins une saillie (26a-26d) rejoint l'espace de logement (14) dans la direction longitudinale au moins d'un côté, de préférence des deux côtés, afin d'empêcher que la roue puisse rouler hors de l'espace de logement (14).

10. Porte-vélo (10) selon l'une des revendications 1 à 9, **caractérisé en ce que** les fixations de roue (12) comportent du caoutchouc, en particulier élastomère, afin de fixer la roue du vélo.

11. Porte-vélo (10) selon l'une des revendications 1 à 10, **caractérisé en ce que** la largeur de l'espace de logement (14) peut être modifiée de manière variable entre 0 mm et 150 mm, de préférence entre 22 mm et 130 mm.

12. Porte-vélo (10) selon l'une des revendications 1 à 11, **caractérisé par** un dispositif de verrouillage (28) destiné à fixer, de préférence temporairement, la largeur de l'espace de logement (14).

13. Porte-vélo (10) selon l'une des revendications 1 à 12, **caractérisé par** un dispositif de support (30) relié à la fixation de roue (12), destiné à disposer le porte-vélo (10) sur une surface, de préférence une surface de sol, dans lequel il est préférable que le dispositif de support (30) comporte deux pieds de support (32a, 32b).

14. Porte-vélo simple avec un unique porte-vélo (10) selon l'une des revendications 1 à 13.

15. Système porte-vélo (100) avec au moins deux porte-vélos (10) selon l'une des revendications 1 à 13 reliés l'un à l'autre, de préférence pouvant être accouplés par contact et/ou par complémentarité de formes et/ou par engagement de force et/ou de manière sélective.
